# EUROPÄISCHE PATENTSCHRIFT

(11) **EP 0 754 593 B1**
(45) Veröffentlichungstag und Bekanntmachung des Hinweises auf die Patenterteilung: **04.11.1998**
(21) Anmeldenummer: 96111411.3
(22) Anmeldetag: 16.07.1996
(51) Int. Cl.: B60R 5/00, B62H 3/00

(54) **Halterung für Fahrräder, insbesondere Trekking-, All-Terrain-, Renn- und Mountainbikes, für Fahrzeug-Innenräume**
Device for holding a bicycle, specially a trekking-bike, an all-terrain-bike, a race bicycle or a mountain-bike, within a vehicle
Dispositif pour maintenir une bicyclette, en particulier un vélo tout terrain, de course, pour la montagne ou pour la randonnée, à l'intérieur d'un véhicule

(30) Priorität: 17.07.1995 DE 19525930; 20.10.1995 DE 19539191
(43) Veröffentlichungstag der Anmeldung: 22.01.1997
(73) Patentinhaber: Heckroth, Horst Gottlieb Walter, 64546 Mörfelden-Walldorf (DE)
(72) Erfinder: Heckroth, Horst Gottlieb Walter, 64546 Mörfelden-Walldorf (DE)
(74) Vertreter: Schüler, Helga Eva-Marie

(56) Entgegenhaltungen:
- DE-A- 4 222 024
- DE-A- 4 330 045
- DE-U- 9 412 752
- US-A- 4 842 148

## Beschreibung

Halterung für Fahrräder, insbesondere Trekking-, All-Terrain-, Renn- und Mountainbikes, für Fahrzeug-Innenräume mit einer Basisplatte, an der eine Auflage für die Vorderradgabel vorgesehen ist, die ein durchgehendes Loch mit einer innen hohlen Achshalterung umfaßt, die eine Achse aufnimmt, die durch die Schlitze in der Vorderradgabel eines Fahrrades hindurchreicht und an ihren Enden Befestigungseinrichtungen aufweist, mit denen die Vorderradgabel fest gegen die Achshalterung geklemmt und dadurch starr mit der Auflage verbunden wird.

Fahrräder müssen häufig mit einem Auto bis zu der Stelle transportiert werden, bei der ein Fahrradausflug oder eine sportliche Betätigung beginnen soll. Bekanntlich werden Fahrräder auf Dachständern transportiert, wodurch jedoch nicht nur ein erhöhter Lufwiderstand erzeugt wird, sondern auch die Gefahr des Lösens bei Unfällen, das Anstoßen an Unterführungen durch die ungewohnte Höhe des Aufbaues sowie ein erhöhtes Risiko für Diebstahl entstehen. Es besteht daher das Bedürfnis, Fahrräder im Innenraum eines Kraftfahrzeuges transportieren zu können, sofern das Fahrzeug einen entsprechend hohen Laderaum aufweist oder durch Umklappen von Sitzteilen einen ausreichend großen Laderaum bieten kann. Wünschenswert ist weiterhin, daß das Fahrrad an einer beliebigen Stelle der Ladefläche aufgestellt werden kann, so daß ausreichend Platz für weiteres Gepäck verbleibt. Damit die Stelle auf der Ladefläche beliebig gewählt werden kann, sollte möglichst keine vorbereitende Montage an Fahrzeugteilen notwendig sein, aber andererseits das Fahrrad doch sicher auch bei längeren Autofahrten und bei hohen Geschwindigkeiten gehaltert werden können.

In der DE-OS 42 22 024 ist eine Halterung der eingangs angegebenen Art beschrieben, die eine Basisplatte umfaßt, auf der ein Auflageblock für die Vorderradgabel befestigt ist, der eine durchgehende Bohrung mit einem hohlzylindrischen, über die Stirnseiten des Auflageblocks hinausragenden Bolzen enthält. Durch das Innere des Bolzens erstreckt sich eine Spannachse mit einer Schnellspanneinrichtung, in die die Schlitze der Vorderradgabel eines Fahrrades einsetzbar sind. Mit der Schnellspanneinrichtung wird die Vorderradgabel fest gegen die Achshalterung geklemmt und dadurch starr mit dem Auflageblock verbunden. Die aus Holz oder Kunststoff hergestellte Basisplatte wird mit Bändern im Fahrzeuginnenraum befestigt.

Eine derartige Fahrradhalterung löst die Probleme, die beim Transport von Fahrrädern im Innenraum von Kraftfahrzeugen auftreten. Da es sich bei dieser Fahrradhalterung jedoch um einen Massenartikel handelt, der möglichst preiswert herstellbar sein soll, ist eine weitere Vereinfachung der Fahrradhalterung mit dem Ziel erwünscht, daß die Herstellungsschritte und -kosten vereinfacht werden.

Aufgabe der vorliegenden Erfindung ist es, eine Fahrradhalterung der beschriebenen Art zu schaffen, die nicht nur von kommerziell leicht erhältlichem Ausgangsmaterial ausgeht, sondern auch durch wenige, einfach zu steuernde Herstellungsschritte herstellbar ist.

Diese Aufgabe wird durch eine Halterung gelöst, wie sie im Anspruch 1 angegeben ist.

Weitere vorteilhafte Ausführungsformen der Erfindung sind in den Ansprüchen 2 bis 18 angegeben.

Bei der Halterung gemäß der Erfindung wird eine Basisplatte aus einer handelsüblichen Platte aus Massivholz, einer Holzplatte in Sperrholzverleimung, beispielsweise Multoplex-Holzplatte, einer Kunststoffplatte, einer Kunststoff/Holzlaminatplatte, Preßplatte oder ähnlichem handelsüblichen Plattenmaterial ausgeschnitten. Wie später noch näher erläutert wird, ist die Rohplatte, die die Basisplatte werden soll, entweder rechteckig oder zumindest in einem großen Teil ihres Umfangs kreisförmig. Danach wird die Basisplatte in ihrem mittleren Bereich mit einem durchgehenden flächigen Loch versehen, dessen eine Begrenzung eine gerade Seite ist. Parallel zu dieser Seite wird die Platte mit einer geraden Außenkante versehen, so daß zwischen der Außenkante und der geraden Seite des flächigen Loches ein gerader Steg entsteht. Die Breite dieses Steges wird so bemessen, daß sie etwa gleich der Breite der Vorderradgabel ist. Durch diesen Steg wird in Richtung seiner Breite ein durchgehendes Loch gebohrt, das die Achshalterung aufnimmt. Nachdem eine Achshalterung in das Loch eingesetzt ist, kann die Vorderradgabel des Fahrrades den Steg umgreifend auf eine durch die hohle Achshalterung verlaufende Achse aufgesetzt und an ihr befestigt werden.

Es erweist sich als besonders zweckmäßig, eine handelsübliche Spannachse zu verwenden, die ein Befestigen der Vorderradgabel mit einem Griff ermöglicht.

Das flächige Loch muß groß genug sein, um ein Hantieren an der Achshalterung mit der Hand zu ermöglichen.

Um das von dem Fahrrad abgenommene Vorderrad auf der Fahrradhalterung zu halten, ist auf der Oberseite der Basisplatte eine geradlinige Nut ausgespart, die im wesentlichen parallel zu dem Steg verläuft und in die das Vorderrad eingesetzt wird. Nach dem Einsetzen wird das Vorderrad beispielsweise mittels Riemen an dem Lenker des Fahrrades befestigt.

Wenn eine rechteckige Grundplatte als Ausgangsplatte für die Basisplatte verwendet wird, wird zweckmäßigerweise von der Außenkante her ein Ausschnitt in die Platte eingeschnitten, der ein gerades Teilstück enthält, das zusammen mit der geraden Seite des flächigen Loches den Steg bildet. Die neben dem geraden Teilstück stehengebliebenen Teile bilden einen Kippschutz.

Wenn eine im wesentlichen runde Basisplatte verwendet wird, hat sich als zweckmäßig erwiesen, die Basisplatte an der Außenkante des Steges in ihrem unteren Teil über die Außenkante, die den Steg begrenzt, hinaus zu verlängern, um einen Kippschutz zu bilden.

Eine weitere Verbesserung sieht vor, daß die Basisplatte, die, wie oben beschrieben, auf eine weite Länge ihres Umfangs durch Kreisbögen begrenzt wird, an einem Teil über die Kreisfläche hinaus so vergrößert ist, daß die Zusatzfläche etwa durch zwei rechtwinklig zueinander stehende Tangenten begrenzt wird, und außerdem die Nut zur Halterung des Vorderrades in dieser Verlängerung in linearer Richtung verlängert ist. Hieraus ergibt sich ein Vorteil beim Transportieren von zwei Fahrrädern, wenn zwei Fahrradhalterungen verwendet werden und dabei das Hinterrad des zweiten Fahrrades in die Nut, die beim Transport nur eines Fahrrades für das Fixieren des Vorderrades dient, eingesetzt wird. Die beiden Fahrräder stehen dann parallel zueinander nebeneinander, wobei das Hinterrad des einen Fahrrades in der Nut der Fahrradhalterung für die Vorderradgabel des anderen Fahrrades fixiert ist. Bei einer rechteckigen Grundplatte erfüllt eine Flächenecke diesen Zweck.

Es ist ersichtlich, daß die Herstellung der Fahrradhalterung gemäß der vorliegenden Erfindung äußerst einfach ist. Die aus einem handelsüblichen Plattenmaterial ausgeschnittene Basisplatte kann mit Schnitten nur in Kreisbogenform und geraden Schnitten hergestellt werden. Das flächige Loch im mittleren Bereich der Basisplatte kann ebenfalls aus einem kreisförmigen Schnitt und einem geraden Schnitt zusammengesetzt werden. Es kann jedoch auch durch gerade Schnitte in Dreieck-, Rechteck- oder anderer Mehreckform erzeugt werden. Wichtig ist nur, daß eine Seite gerade ist, die eine Seite des Steges begrenzt. Die andere Seite des Steges bildet eine gerade Außenkante. Auch die Nut für das Vorderrad erfordert nur einen linearen Fräsvorgang. Die Verlängerung der Basisplatte im unteren Teil für den Kippschutz wird ebenfalls mit einem linearen Frässchnitt bewirkt. Das Loch für die Achse mit der Spannachse ist ein einfacher Bohrvorgang,desgleichen sind runde Löcher oder Langlöcher für Befestigungsmittel einfache Bohrungen senkrecht zur Plattenebene.

Alle genannten Arbeitsschritte können sehr einfach durchgeführt werden, sei es von Hand oder sei es mit einer numerisch gesteuerten Maschine.

Auch wenn die Fahrradhalterung gemäß der Erfindung aus Kunststoff, beispielsweise durch Pressen oder Spritzen hergestellt wird, ist sie bezüglich der erforderlichen Arbeitsgänge einfach herzustellen, da sie keine Hinterschneidungen aufweist. Die Formen können beispielsweise so ausgelegt werden, daß das Loch für die Achshalterung durch einen zylindrischen Dorn erzeugt wird, der nach dem Aufklappen der Formen aus dem Loch herausgezogen wird.

Ein weiterer Vorteil bei der Handhabung der Fahrradhalterung gemäß der Erfindung ergibt sich dadurch, daß sie auch nach völliger Endbearbeitung nur ein plattenförmiger Gegenstand ist. Dadurch ist ihre Lagerung besonders einfach, und sie kann leicht im Kraftfahrzeug verstaut werden, wenn sie nicht gebraucht wird.

Das flächige Loch ist exzentrisch so auf der Basisplatte angebracht, daß auf der gleichen Basisplatte eine Halterung für das demontierte Vorderrad vorgesehen werden kann. Es ist vorteilhaft, diese Halterung für das Vorderrad so anzubringen, daß sich das Vorderrad unter dem Lenker befindet, so daß es beispielsweise mittels eines Riemens an dem Lenker festgebunden werden kann.

Versuche mit einer Fahrradhalterung gemäß der Erfindung haben gezeigt, daß selbst bei Geschwindigkeiten von 200 km/h und bei Kurvenfahrt eine sichere Halterung eines Fahrrades im Kraftfahrzeug gewährleistet ist. Obwohl keine Abstützung des Fahrrades an Fahrzeug-Innenteilen wie an der Seiten- oder Deckenverkleidung oder an Sitzrückflächen notwendig ist, kann natürlich eine zusätzliche Fixierung an dafür geeigneten Stellen, zum Beispiel an festen Haltegriffen oder vom Fahrzeughersteller vorgesehenen Halterungen zur Ladungssicherung im Fahrzeug-Innenraum erfolgen.

Mit zwei Fahrradhalterungen gemäß der Erfindung können auf einfache Weise auch zwei Fahrräder im Innenraum des Kraftfahrzeugs transportiert werden. In diesem Fall werden zweckmäßigerweise die zwei Fahrräder so angeordnet, daß das erste Fahrrad, das auf der ersten Halterung mit der Vorderradgabel ruht, mit dem Hinterrad in der Vorderradhalterung der zweiten Halterung für das zweite Fahrrad ruht und das mit seiner Vorderradgabel auf der zweiten Halterung fixierte zweite Fahrrad mit seinem Hinterrad in der Vorderradhalterung der ersten Halterung liegt. Dabei müssen die demontierten Vorderräder beider Fahrräder getrennt transportiert werden. Die beiden Fahrräder sind jedoch zu einer standfesten sicheren Kombination zusammengestellt worden, die außerdem sehr platzsparend ist. Selbst zwei Fahrräder unterschiedlicher Rahmenhöhe und Rahmenlänge können auf diese Weise sicher aufgestellt werden.

Die Basisplatte der Fahrradhalterung gemäß der Erfindung weist vorzugsweise auf ihrer Unterseite Mittel auf, die die Halterung rutschfest machen. Die Art der Ausstattung für Rutschfestigkeit wird sich nach der Bodenbeschaffenheit der Ladefläche richten. Wenn die Ladefläche mit Teppichboden belegt ist, ist die Basisplatte auf ihrer Unterseite vorzugsweise mit Klettband und/oder Spitzen versehen, die sich im Teppichboden festhaken können. Für glatte Ladeflächen ist die Basisplatte auf ihrer Unterseite mit rutsch- oder stoßfesten Kunststoffbelägen oder Saugnäpfen versehen. Die Unterseite der Basisplatte kann mit Unebenheiten verschiedener Art wie Wellungen, Haken, Spitzen oder dergleichen versehen sein.

Die Dimensionierung der Basisplatte ist so gewählt, daß nach dem Befestigen eines Fahrrads an der Halterung der Vorbau des Rades bzw. des Lenkers nicht über die Ebenen der Rückenlehnen der Fahrzeugsitze übersteht. Die Dimensionierung der Basisplatte wird so gewählt, daß die Achshalterung zum vorderen Rand der Scheibe einen Sicherheitsabstand des Fahrradvorbaues bzw. Lenkers zu den Rückenlehnen gewährleistet, selbst wenn die Basisplatte bis an die Ebene der Rückenlehnen vorgeschoben ist. Wenn ein zweites Fahrrad transportiert wird, entsteht der Sicherheitsabstand dadurch, daß das Hinterrad des zweiten Fahrrads in der Vorderradhalterung der ersten Halterung fixiert ist.

Die Erfindung wird im folgenden durch Ausführungsbeispiele näher beschrieben. Dabei wird auf die beigefügten Zeichnungen Bezug genommen.

In den Zeichnungen zeigen:
- Figur 1 -: eine Draufsicht auf die Basisplatte der Fahrradhalterung gemäß der Erfindung gemäß einem Ausführungsbeispiel,
- Figur 2 -: eine Seitenansicht der in Figur 1 dargestellten Basisplatte auf die Seite des Steges,
- Figur 3 -: die Ansicht eines Schnittes durch die in Figur 1 dargestellte Basisplatte entlang der Linie III-III in Figur 1,
- Figur 4 -: eine Draufsicht auf die Basisplatte der Fahrradhalterung gemäß einem zweiten Ausführungsbeispiel,
- Figur 5 -: eine Seitenansicht der in Figur 4 dargestellten Basisplatte auf die Seite des Steges,
- Figur 6 -: die Ansicht eines Schnittes durch die in Figur 4 dargestellte Basisplatte entlang der Linie VI-VI in Figur 4,
- Figur 7 -: einen Teilschnitt durch die Achshalterung,
- Figur 8 -: einen Schnitt durch die Achshalterung gemäß einer anderen Ausführungsform,
- Figur 9 -: eine Draufsicht auf eine Fahrradhalterung gemäß der Erfindung mit einem eingesetzten Fahrrad,
- Figur 10 -: eine Draufsicht auf die Kombination aus zwei Fahrradhalterungen gemäß der Erfindung zur Halterung von zwei Fahrrädern, und
- Figuren 11a - 11d -: die Schritte des Einsetzens eines Fahrrades in die Halterung gemäß der Erfindung.

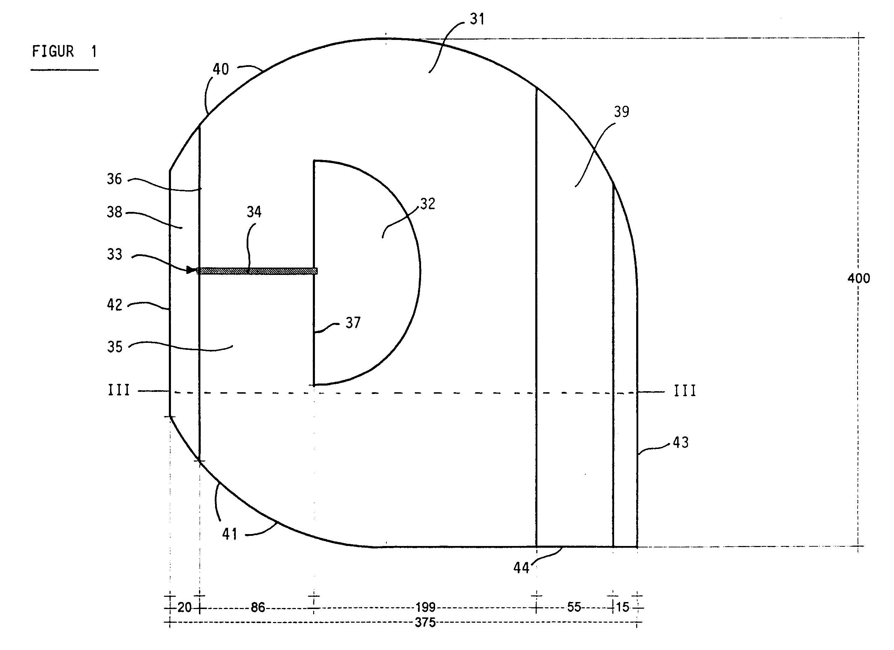

Figur 1 zeigt die Basisplatte 31 der Fahrradhalterung in einer Draufsicht mit dem flächigen Loch 32 und einer Angabe der Position des Loches 33 zur Aufnahme der Achshalterung 34 im Steg 35. Der Steg 35 wird durch die Außenkante 36 und die gerade Seite 37 des flächigen Loches 32 gebildet. Die Basisplatte ist in ihrem unteren Teil über die Außenkante 36 hinaus verlängert, um einen Kippschutz 38 zu bilden.

Die Basisplatte 31 ist aus einer Holzplatte in Sperrholzverleimung, einer Multoplex-Holzplatte, ausgeschnitten. Die Dicke d hängt von dem spezifischen Gewicht und der Steifigkeit des Materials ab. Sie liegt je nach Materialeigenschaften im Bereich von 3 - 6 cm. Im dargestellten Beispiel wurde eine Multoplex-Platte mit einer Dicke d von 3 cm gewählt. In diesem Falle ist es ausreichend, den Kippschutz 38 ca. 1 cm dick zu machen.

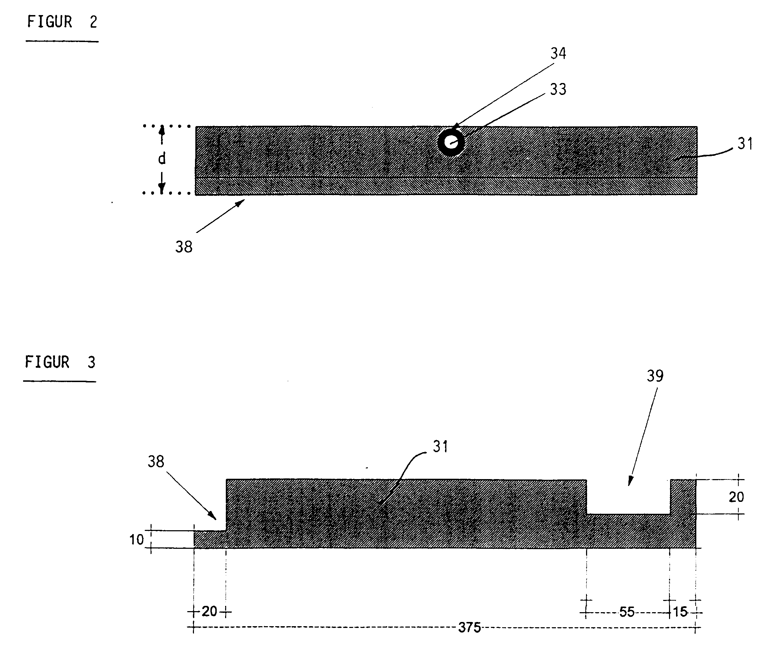

In Figur 3 ist die Nut 39 für das Vorderrad als im wesentlichen rechteckige Aussparung auf der Oberseite der Basisplatte 31 zu sehen. Eine Aussparung mit einer Tiefe von 2 cm ist ausreichend, um das Vorderrad festzulegen.

Das in Figur 2 sichtbare Loch 33 für die Achshalterung beträgt etwa 10 mm im Durchmesser. In dieses Loch wird die Achshalterung 34, vorzugsweise eine handelsübliche Spannachse, eingesetzt, mit der die Vorderradgabel nach dem Einsetzen befestigt werden kann. Die Stegbreite ist etwas schmaler, als handelsübliche Spannachsen breit sind, so daß diese gut eingesetzt werden können. Die Stegbreite ist also vorzugsweise etwas kleiner als 10 cm.

Aus Figur 1 ist ersichtlich, daß sich der Umriß der Basisplatte 31 aus Kreisbogenteilen 40 und 41 und linearen Teilen 42, 43 und 44 zusammensetzt, wobei die linearen Teile 43 und 44 Tangenten an den Kreis der Kreisbögen 40 und 41 sind, die sich im rechten Winkel treffen.

Die Nut 39 für das Vorderrad ist in die Verlängerung zwischen den linearen Teilen 43 und 44 geradlinig verlängert.

Damit die Fahrradhalterung gemäß der Erfindung auf dem Boden im Fahrzeug-Innenraum feststeht, ist die Basisplatte 31 an ihrer Unterseite rutschfest gemacht. Zu diesem Zweck können Unebenheiten, Spitzen, Wellungen, Noppen und/oder Saugnäpfe an der Unterseite vorgesehen werden. Im allgemeinen wird es ausreichend sein, mit Klebband entsprechend ausgestattete Bänder oder Stanzteile an der Unterseite der Basisplatte anzukleben. Wenn die Fahrzeughalterung gemäß der Erfindung aus Kunststoff hergestellt wird, können die genannten Unebenheiten, wie Spitzen, Wellungen, Noppen oder Saugnäpfe, auch direkt beim Herstellen an das Material angeformt werden.

Die Fahrradhalterung gemäß der Erfindung eignet sich auch dazu, daß sie als Preßteil aus wenigstens zum Teil recyceltem Kunststoffmaterial ausgeformt wird.

An der Basisplatte 31 können an geeigneten Stellen weitere durchgehende Löcher gebohrt oder ausgeformt werden, durch die Riemen gezogen werden können, um eine Fixierung an anderen Teilen des Fahrzeug-Innenraums anzubringen.

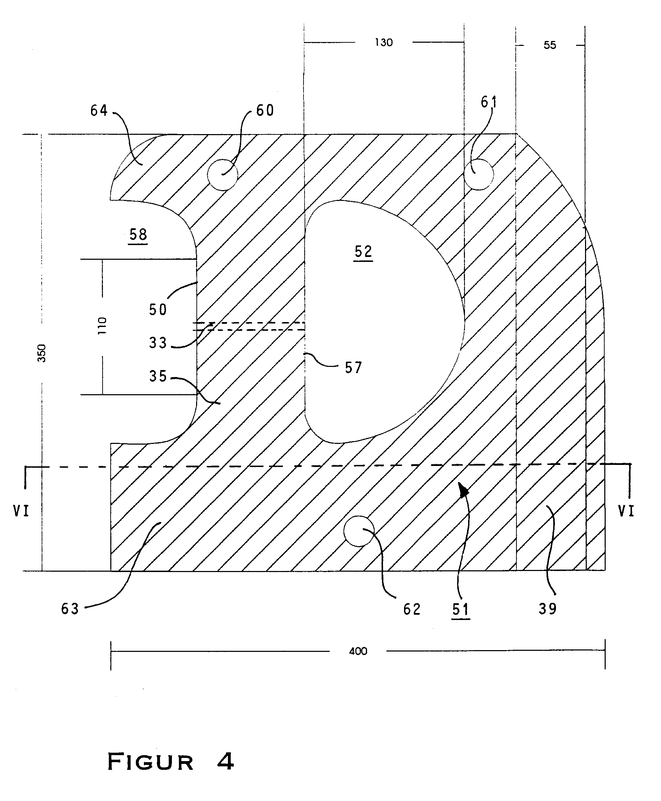

Figur 4 zeigt ein anderes Ausführungsbeispiel für die Basisplatte 51 der Fahrradhalterung in einer Draufsicht mit dem flächigen Loch 52, bei der die Basisplatte aus einer rechteckigen Grundplatte ausgeschnitten ist. Das flächige Loch 52 weist eine gerade Seite 57 auf, die parallel zu einer geraden Kante 50 eines Ausschnitts 58 an einer Seite des Rechtecks verläuft und mit dieser geraden Kante 50 den Steg 35 begrenzt. In dem Steg 35 befindet sich das durchgehende Loch 33 zur Aufnahme der Achshalterung 34.

Neben dem Ausschnitt 58 von der Grundplatte stehengebliebene Teile 63 und 64 sorgen für einen Kippschutz.

In Randnähe der Basisplatte sind mehrere Löcher 60, 61 und 62 durch das Material der Platte gebohrt, durch die Befestigungsmittel wie Riemen oder Bänder gezogen werden können, mit denen die Basisplatte an Ösen oder Haken im Fahrzeuginnenraum befestigt werden kann.

Auch bei diesem Ausführungsbeispiel wird die Grundplatte aus plattenartigem Material durch geometrisch einfache Schnitte hergestellt.

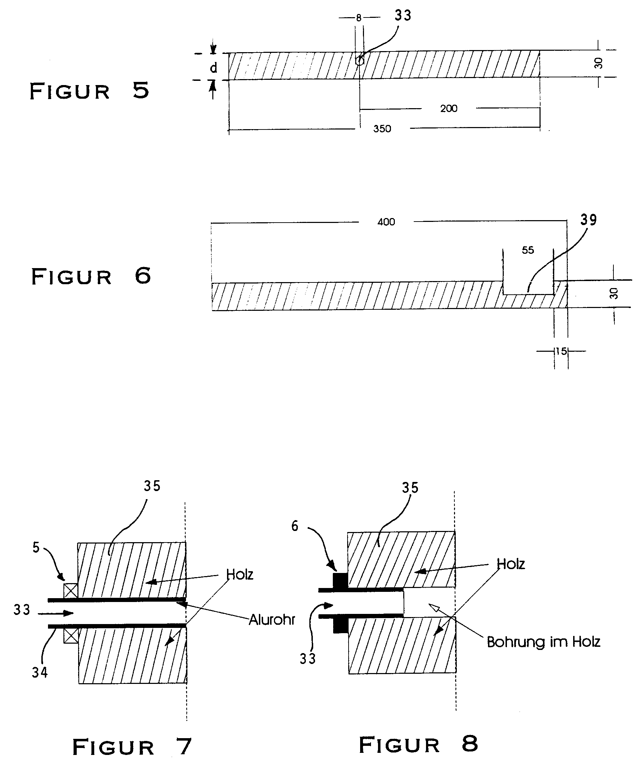

Die Einzelheiten der Achshalterung in dem Steg 35 und der Nut 39 für das Vorderrad entsprechen denen für das erste in den Figuren 1 bis 3 dargestellten Ausführungsbeispiels. Figur 5 zeigt die in Figur 4 dargestellte Basisplatte von der Seite des Ausschnitts 58 gesehen, während Figur 6 einen Schnitt durch die Basisplatte entlang der Linie VI-VI in Figur 4 zeigt.

Figur 7 zeigt eine Achshalterung 34, die aus einem Aluminiumrohr besteht, das in das durchgehende Loch 33 durch den Steg 35 eingepaßt ist. Stellringe 5 an den Enden der Achshalterung fixieren die Achshalterung in dem Steg 35.

Eine andere Ausführungsform der Achshalterung ist in Figur 8 dargestellt. Sie besteht aus zwei Metallhülsen 6, die jeweils an den Enden des Loches 33 in das Material des Steges 35 eingepreßt oder eingeschraubt sind.

In beiden Fällen dient die Achshalterung der Aufnahme einer Spannachse.

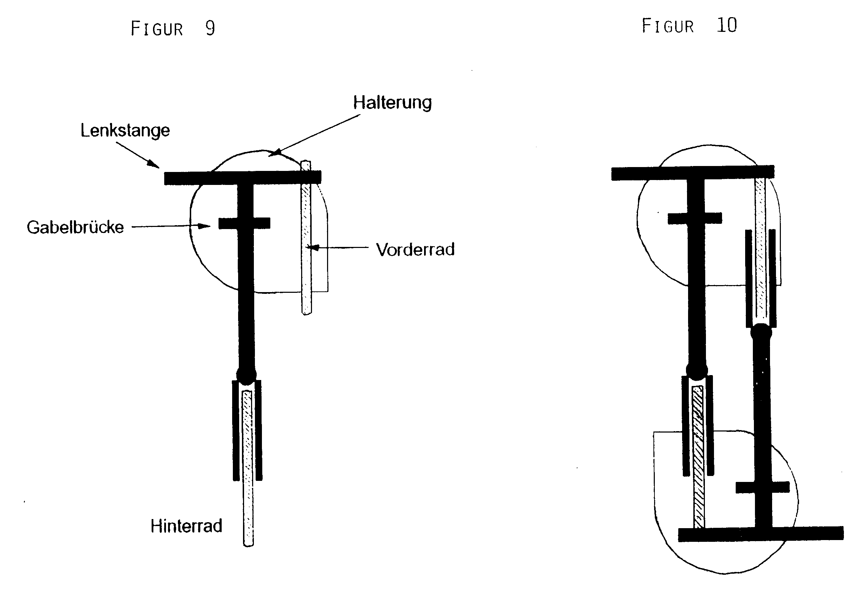

Figur 9 zeigt eine Draufsicht auf ein Fahrrad, das in die Fahrradhalterung gemäß dem ersten, in den Figuren 1 bis 3 gezeigten Ausführungsbeispiel eingesetzt ist. Das Vorderrad befindet sich in der Nut 39, und die Vorderradgabel ist auf eine Spannachse in der Achshalterung 34 aufgesetzt und gegen diese festgeklemmt. Das Vorderrad ist zum Beispiel mit einem Riemen an der Lenkstange befestigt. Das Hinterrad liegt auf dem Fahrzeugboden auf.

Figur 10 zeigt die Anordnung von zwei Halterungen gemäß der Erfindung zum Transport von zwei Fahrrädern. Die Vorderräder der beiden Fahrräder werden getrennt im Fahrzeug verstaut. Das erste Fahrrad ist mit seiner Vorderradgabel auf der ersten Halterung festgeklemmt und sein Hinterrad ruht in der Nut 39 der zweiten Halterung. Das zweite Fahrrad ist mit seiner Vorderradgabel auf der zweiten Halterung festgeklemmt und ruht mit seinem Hinterrad in der Nut 39 der ersten Halterung. Das Hinterrad des einen Fahrrads ist jeweils mit der Lenkstange des anderen Fahrrads beispielsweise durch Riemen verbunden.

Figur 10 zeigt, daß eine platzsparende Anordnung von zwei Fahrrädern mittels zwei Halterungen gemäß der Erfindung möglich ist.

Die rechtwinklige Verlängerung an der dem Steg 35 abgewandten Seite der Basisplatte ist eine verlängerte Auflagefläche für das Rad in der Nut 39 und gewährleistet, daß bei Halterung von zwei Fahrrädern unterschiedlicher Rahmenhöhe in einer in Figur 10 gezeigten Anordnung das Hinterrad des kleineren Rades auf der Basisplatte des größeren Fahrrads steht. Da sich mit unterschiedlicher Rahmenhöhe auch die Oberrohrlänge und die Länge der Kettenstrebe ändern, ändert sich auch der Achsabstand. Bei der Montage zweier Räder liegt der Lenker des kleineren Fahrrads relativ niedrig und bei der Montage des zweiten Fahrrads stößt dessen Hinterrad an die Lenkstange an. Die Gabel des zweiten, längeren Fahrrads bestimmt die Lage der zweiten Basisplatte. Auch wenn der Abstand zwischen den beiden Basisplatten groß wird, liegt das Hinterrad des ersten, kürzeren Fahrrads auf der Basisplatte im Bereich der rechtwinkligen Verlängerung auf. Die Standsicherheit der beiden ungleich langen bzw. hohen Fahrräder ist dadurch sichergestellt.

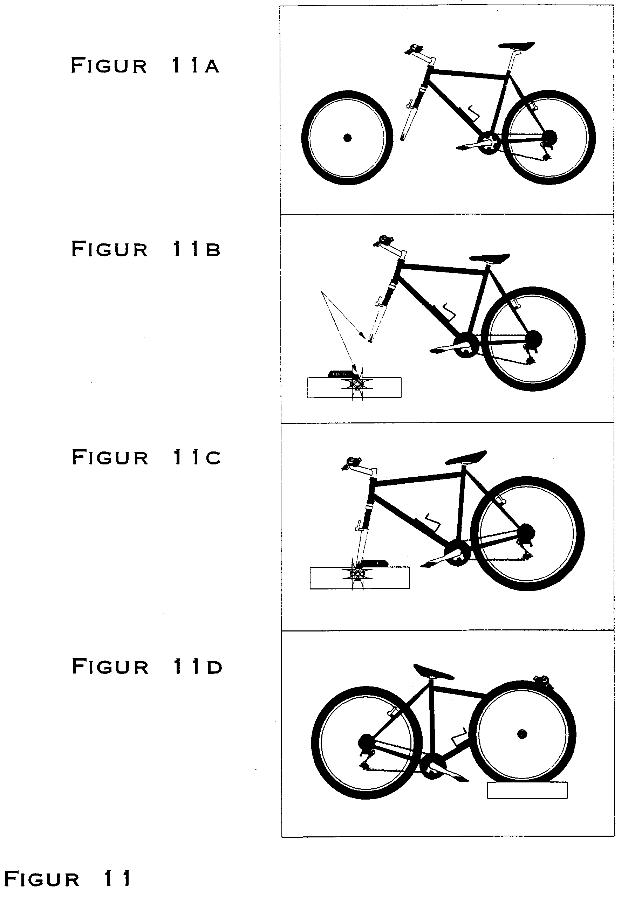

Figuren 11a - 11d zeigen verschiedene Schritte des Einsetzens eines Fahrrads in die Halterung gemäß der Erfindung.
Figur 11a: Das Vorderrad des Fahrrads wird abgenommen, und die Sattelstütze wird soweit wie möglich eingeschoben.
Figur 11b: Die Vorderradgabel wird beiderseits des Steges 35 in die Schnellspanneinrichtung der Achshalterung eingesetzt.
Figur 11c: Die Schnellspanneinrichtung wird geschlossen.
Figur 11d: Das Vorderrad wird zwischen Lenkstange und Nut 39 geklemmt.

Das nun auf der Halterung stehende Fahrrad und die Basisplatte werden für den Transport innerhalb des Kraftfahrzeugs gesichert, indem Spannriemen durch die vorgesehenen Befestigungslöcher 60, 61 und 62 gezogen und im Wageninneren befestigt werden.

## Patentansprüche

1. Halterung für Fahrräder, insbesondere Trekking-, All-Terrain-, Renn- und Mountainbikes, für Fahrzeuginnenräume mit einer Basisplatte, an der eine Auflage für die Vorderradgabel vorgesehen ist, die ein durchgehendes Loch (33) mit einer innen hohlen Achshalterung (34) umfaßt, die eine Achse aufnimmt, die durch die Schlitze in der Vorderradgabel eines Fahrrades hindurchreicht und an ihren Enden Befestigungseinrichtungen aufweist, mit denen die Vorderradgabel fest gegen die Achshalterung geklemmt und dadurch starr mit der Auflage verbunden wird,
**dadurch gekennzeichnet**, daß die Basisplatte (31,51) in ihrem mittleren Bereich ein durchgehendes flächiges Loch (32,52) aufweist, dessen eine Begrenzung eine gerade Seite (37,57) ist, die parallel zu einer in die Basisplatte geschnittenen Kante verläuft und von dieser Kante um einen Abstand beabstandet ist, der etwa gleich der Breite der Vorderradgabel ist, so daß ein gerader Steg (35) gebildet wird, durch den das hindurchgehende Loch (33) für die Achshalterung (34) von der besagten Kante der Basisplatte zur geraden Seite des flächigen Loches, innerhalb der Basisplattenebene verlaufend, hindurchgeht, wobei die Vorderradgabel den Steg umgreifend auf eine Achse in der Achshalterung (34) aufsetzbar ist, und das flächige Loch (32,52) groß genug ist, um ein Hantieren mit der Hand an der Achshalterung zu ermöglichen.

2. Halterung nach Anspruch 1, **dadurch gekennzeichnet**, daß die zur geraden Seite (37,57) des flächigen Loches (32,52) parallele Kante eine Außenkante der Basisplatte ist.

3. Halterung nach Anspruch 2, **dadurch gekennzeichnet**, daß die Außenkante (50) in einem vom Außenrand der Basisplatte eingeschnittenen Ausschnitt gelegen ist.

4. Halterung nach Anspruch 1, **dadurch gekennzeichnet**, daß auf der Oberseite der Basisplatte (31,51) eine geradlinige Nut (39) ausgespart ist, die im wesentlichen parallel zu dem Steg (35) verläuft und das Vorderrad aufnimmt und auf der Basisplatte fixiert.

5. Halterung nach einem der Ansprüche 1, 2, 3 oder 4, **dadurch gekennzeichnet**, daß die Basisplatte (51) aus einer rechteckigen Grundplatte hergestellt ist, indem von einer Außenkante her ein Ausschnitt mit einer wenigstens entlang eines Teilstücks geraden Außenkante (50) eingeschnitten und ein flächiges Innenloch (52) so ausgeschnitten worden sind, daß eine gerade Seite (57) des Innenlochs zusammen mit dem geraden Außenkantenteilstück den Steg (35) bildet.

6. Halterung nach einem der Ansprüche 1 bis 5, **dadurch gekennzeichnet**, daß in Randbereiche der Basisplatte weitere Rund- oder Langlöcher (60,61,62) zur Anbringung von Befestigungshilfen eingeschnitten sind.

7. Halterung nach Anspruch 4, **dadurch gekennzeichnet**, daß die Basisplatte (31) eine im wesentlichen kreisförmige Scheibe ist, die zur Ausbildung des Steges (35) an einer Seite gerade beschnitten ist, wodurch die Außenkante gebildet wird, und an der anderen Seite parallel zur Außenkante die Nut (39) zur Halterung des Vorderrades enthält und in der Verlängerung dieser Nut über die Kreisfläche hinaus vergrößert ist, so daß die Zusatzfläche durch zwei etwa rechtwinklig zueinander stehende Tangenten (43, 44) begrenzt wird.

8. Halterung nach Anspruch 7, **dadurch gekennzeichnet**, daß die Basisplatte (31) in ihrem unteren Teil, unterhalb des durchgehendes Loches (33) für die Achshalterung (34), über die Außenkante (36), die den Steg (35) begrenzt, hinaus verlängert ist, um einen Kippschutz (38) zu bilden.

9. Halterung nach einem der Ansprüche 1 bis 8, **dadurch gekennzeichnet**, daß die Basisplatte (31,51) an ihrer Unterseite rutschfest gemacht worden ist.

10. Halterung nach Anspruch 9, **dadurch gekennzeichnet**, daß mindestens ein Teil der Unterseite der Basisplatte Unebenheiten, Spitzen, Wellungen, Noppen und/oder Saugnäpfe aufweist.

11. Halterung nach Anspruch 9, **dadurch gekennzeichnet**, daß auf der Unterseite der Basisplatte ein Band mit Spitzen, ein Klettband oder ähnliches Teil mit vorstehenden Unebenheiten angebracht ist, das sich im Belagteppich für Fahrzeugböden verhaken kann.

12. Halterung nach einem der Ansprüche 1 bis 11, **dadurch gekennzeichnet**, daß die Basisplatte (31,51) aus Massivholz oder Holzplatten in Sperrholzverleimung oder Multoplex-Holzplatten durch Ausschneiden und/oder Abfräsen hergestellt ist.

13. Halterung nach einem der Ansprüche 1 bis 11, **dadurch gekennzeichnet**, daß die Basisplatte aus Kunststoff, zum Beispiel Polyäthylen, gepreßt ist, der wenigstens zum Teil recyceltes Kunststoffmaterial umfaßt.

14. Halterung nach einem der Ansprüche 1 bis 13, **dadurch gekennzeichnet**, daß die Befestigungseinrichtungen an der Achse Muttern sind, die auf Schraubgewinde an den Enden der Achse geschraubt werden.

15. Halterung nach einem der Ansprüche 1 bis 13, **dadurch gekennzeichnet**, daß die Achse mit den Befestigungseinrichtungen eine handelsübliche Spannachse ist, bei der ein Exzenter den Anpreßdruck erzeugt.

16. Fahrradhalterung nach Anspruch 1, **dadurch gekennzeichnet**, daß die Achshalterung (34) ein in dem Loch (33) in dem Steg (35) befestigtes Metallrohr mit beiderseits des Steges herausragenden Enden ist, wobei auf jedem Ende ein Kragen vorgesehen ist, gegen den jeweils die Schlitzbereiche eines unteren Endes der Vorderradgabel mittels der Befestigungseinrichtung an der Achse festgeklemmt werden.

17. Fahrradhalterung nach Anspruch 1, **dadurch gekennzeichnet**, daß die Achshalterung (34) aus zwei in das Loch (33) in dem Steg (35) eingepreßte oder eingeschraubte Hülsen mit Kragen besteht, wobei jeweils die Schlitzbereiche eines unteren Endes der Vorderradgabel mittels der Befestigungseinrichtungen an der Achse gegen einen Kragen festgeklemmt werden.

18. Fahrradhalterung nach einem der Ansprüche 1 bis 3, **dadurch gekennzeichnet**, daß die Vorderradhalterung die Nut (39) in der Basisplatte ist, die sich an solch einer Stelle befindet, daß sich der obere Teil des Rades in Gebrauch unter einem Lenkerarm befindet und gegen diesen beispielsweise mittels Riemen fixierbar ist.

## Claims

1. Holding device for bicycles, in particular for trekking-bikes, all-terrain-bikes, racing bikes or mountain-bikes, said holding device being destined for car interiors and having a base plate, whereat a seat is provided for the front-wheel fork that comprises a through hole (33) with an inwardly hollow wheel shaft bearing (34) which receives a shaft that extends through the slots in the front-fork of a bicycle and comprises fixing contrivances at its ends, wherewith the front-wheel fork is fixedly cramped against the wheel shaft bearing thereby being rigidly connected with said seat,
**characterized in that** said base plate (31, 51) comprises a flat through hole (32, 52) at its middle portion, one limitation thereof constituting a straight side running in parallel to an edge carved into said base plate and having a distance from said edge that equals about the width of the front-wheel fork, so as to form a straight bar (35) through which extends said through hole (33) for the whell shaft bearing (34) from said edge of the base plate to said straight side of the flat hole by running inside the plane of said base plate, whereby the front-wheel fork encompassing said bar can be put upon a shaft in said wheel shaft bearing (34), and in that said flat hole (32, 52) is as great as to enable manual handling at the wheel shaft bearing.

2. Holding device according to claim 1, characterized in that the edge running in parallel to the straight side (37, 57) of the flat hole (32, 52) is an outer edge of the base plate.

3. Holding device according to claim 2, characterized in that the outer edge (50) is situated in a notch that is incised from the outside border of the base plate.

4. Holding device according to claim 1, characterized in that, on the upper side of the base plate (31, 51), a rectilinear groove (39) is recessed that essentially runs in parallel to the bar (35) and receives the front-wheel for fixation on the base plate.

5. Holding device according to one of claims 1, 2, 3 or 4, characterized in that the base plate is manufactured from a rectangular sole plate by incising from an outer edge thereof a notch having an outer edge (50) that is straight at least along a section thereof, and by excising a flat inner hole (52) in such a way that a straight side (57) of the inner hole forms the bar (35) together with the straight outer edge section.

6. Holding device according to one of claims 1 to 5, characterized in that further round or oblong holes (60, 61, 62) are incised into the edge area of the base plate for the attachment of mounting elements.

7. Holding device according to claim 4, characterized in that the base plate is an essentially circular disk that is straightly trimmed at one side thereof so as to form the bar (35), by which means the outer edge is formed, and comprises at the other side in parallel to the outer edge the groove for holding the front-wheel and extends along the elongation of the groove beyond the circular area so as to delimit the additional area by two tangents (43, 44) in approximately rectangular orientation one to another.

8. Holding device according to claim 7, characterized in that, underneath the through hole (33) for the wheel shaft bearing (34), the base plate (31) is elongated at its lower portion beyond the outer edge (36) delimiting the bar (35), in order to form protection (38) against tilt.

9. Holding device according to one of claims 1 to 8, characterized in that the base plate (31, 51) has been made skid-proof at its underside.

10. Holding device according to claim 9, characterized in that at least a part of the underside of the base plate is provided with depressions, points, corrugations, naps and/or suction cubs.

11. Holding device according to claim 9, characterized in that a tape with points or a burring tape or the like having protruding depressions is mounted at the underside of the base plate which can hook to the floor mat of the vehicle.

12. Holding device according to one of claims 1 to 11, characterized in that the base plate (31, 51) is made of massive wood or of laminated wooden boards or of Multoplex wooden boards by cutting out and/or milling off.

13. Holding device according to one of claims 1 to 11, characterized in that the base plate is made of compressed synthetic, such as polyethylene, which comprises at least recycled synthetic material.

14. Holding device according to one of claims 1 to 13, characterized in that the mounting devices at the wheel shaft are nuts screwed on threads at the ends of said wheel shaft.

15. Holding device according to one of claims 1 to 13, characterized in that the wheel shaft with the mounting devices is a customary clamping shaft wherein an exccentric provides the pressing power.

16. Holding device for bicycles according to claim 1, characterized in that the wheel shaft bearing (34) is a metal tube mounted in the hole (33) of the bar (35) and having ends that protrude from both sides of the bar, wherein a collar is provided at each end whereagainst the slot portions of each lower end of the front-wheel fork are clamped at the wheel shaft by means of the fixing contrivance.

17. Holding device for bicycles according to claim 1, characterized in that the wheel shaft bearing (34) consists of two bushings with a collar that are pressed or screwed into the hole (33) in the bar (35), wherein each of the slot portions of the lower end of the front-wheel fork are clamped against a collar by means of the fixing contrivance at the wheel shaft.

18. Holding device for bicycles according to one of claims 1 to 3, characterized in that the front-wheel holding device is the groove (39) in the base plate that is situated at such a site, that, when operated, the upper portion of the wheel is placed beneeth an arm of the handlebar and can be fixed against said arm, e.g., by means of straps.

## Revendications

1. Dispositif de retenue pour bicyclettes, notamment pour des vélos de randonnée, des vélos tout-terrain, des vélos de course et des vélos pour la montagne, pour des habitacles de véhicules, comportant une plaque de base, sur laquelle est prévu un support pour la fourche de la roue avant, qui comporte un trou traversant (33) possédant un dispositif intérieur creux de retenue d'axe (34), qui loge un axe qui traverse les fentes formées dans la fourche de la roue avant d'une bicyclette et possède, au niveau de ses extrémités, des dispositifs de fixation, avec lesquels la fourche de la roue avant est serrée fermement contre le dispositif de retenue d'axe et de ce fait est reliée rigidement à l'appui,
caractérisé en ce que la plaque de base (41,51) comporte, dans sa partie centrale, un trou traversant aplati (32,52), dont une limite est un côté rectiligne (37,57), qui s'étend parallèlement à un bord découpé dans la plaque de base et est séparé de ce bord par une distance qui est approximativement égale à la largeur de la fourche de la roue avant, ce qui définit une barrette rectiligne (35), que traverse le trou traversant (33) prévu pour le dispositif de retenue d'axe (34) depuis ledit bord de la plaque de base jusqu'au côté rectiligne du trou aplati, en s'étendant à l'intérieur du plan de la plaque de base, la fourche de la roue avant pouvant être placée en appui sur un axe dans le dispositif de retenue d'axe (34), en entourant la barrette, et le trou aplati (32,52) étant suffisamment grand pour permettre d'actionner manuellement le dispositif de retenue d'axe.

2. Dispositif de retenue selon la revendication 1, caractérisé en ce que le bord, qui est parallèle au côté rectiligne (37,57) du trou aplati (32,52), est un bord extérieur de la plaque de base.

3. Dispositif de retenue selon la revendication 2, caractérisé en ce que le bord extérieur (50) est situé dans une découpe formée dans le bord extérieur de la plaque de base.

4. Dispositif de retenue selon la revendication 1, caractérisé en ce que sur la face supérieure de la plaque de base (31,51) est aménagée une rainure rectiligne (39), qui est essentiellement parallèle à la barrette (35), reçoit la roue avant et est fixée sur la plaque de base.

5. Dispositif de retenue selon l'une des revendications 1, 2, 3 ou 4, caractérisé en ce que la plaque de base (51) est formée par une plaque de base rectangulaire, par le fait qu'une découpe possédant un bord extérieur (50), qui est rectiligne au moins sur une partie de son étendue, est formée à partir d'un bord extérieur et qu'un trou intérieur aplati (52) est découpé de telle sorte qu'un côté rectiligne (57) du trou intérieur définit la barrette (35) conjointement avec la partie rectiligne du bord extérieur.

6. Dispositif de retenue selon l'une des revendications 1 à 5, caractérisé en ce que d'autres trous circulaires ou oblongs (60,61,62) pour le montage de systèmes auxiliaires de fixation sont découpés dans des zones ou bord de la plaque de base.

7. Dispositif de retenue selon la revendication 4, caractérisé en ce que la plaque de base (31) est un disque de forme essentiellement circulaire, qui, pour la formation de la barrette (35), est découpé selon une forme rectiligne sur un côté, ce qui conduit à la formation du bord extérieur, et comporte, sur l'autre côté, parallèlement au bord extérieur, la rainure (39) servant à retenir la roue avant et s'élargit, dans le prolongement de cette rainure, au-delà de la surface circulaire de sorte que la surface supplémentaire est délimitée par deux tangentes (43,44) qui sont approximativement perpendiculaires entre elles.

8. Dispositif de retenue selon la revendication 7, caractérisé en ce que la plaque de base (31) est en outre prolongée dans sa partie inférieure, au-dessous du trou traversant (33) pour le dispositif de retenue d'axe (34) au-delà du bord extérieur (36), qui limite la barrette (35), de manière à former un système (38) de protection contre le basculement.

9. Dispositif de retenue selon l'une des revendications 1 à 8, caractérisé en ce que la plaque de base (31,51) est réalisée de manière à être antidérapante au niveau de sa face inférieure.

10. Dispositif de retenue selon la revendication 9, caractérisé en ce qu'au moins une partie de la face inférieure de la plaque de base comporte des inégalités, des pointes, des ondulations, des boutons et/ou des ventouses.

11. Dispositif de retenue selon la revendication 9, caractérisé en ce que sur la face inférieure de la plaque de base est disposée une bande comportant des pointes, une bande agrippante ou un élément analogue possédant des inégalités en saillie et qui peut s'accrocher dans le tapis de revêtement de planchers de véhicules.

12. Dispositif de retenue selon l'une des reverdications 1 à 11, caractérisé en ce que la plaque de base (31,51) est réalisée en bois massif ou au moyen de lattes de bois collées en forme de contre-plaqué ou de lattes de bois Multoplex, par découpage et/ou fraisage.

13. Dispositif de retenue selon l'une des revendications 1 à 11, caractérisé en ce que la plaque de base est formée par moulage d'une matière plastique, par exemple du polyéthylène, qui inclut une matière plastique au moins en partie recyclée.

14. Dispositif de retenue selon l'une des revendications 1 à 13, caractérisé en ce que les dispositifs de fixation au niveau de l'axe sont des écrous, qui sont vissés sur des filetages situés sur les extrémités de l'axe.

15. Dispositif de retenue selon l'une des revendications 1 à 13, caractérisé en ce que l'axe équipé des dispositifs de fixation est un axe de serrage usuel dans le commerce, dans lequel un excentrique produit la force de serrage.

16. Dispositif de retenue selon la revendication 1, caractérisé en ce que le dispositif de retenue d'axe (34) est un tube métallique, qui est fixé dans le trou (33) formé dans la barrette (35) et comporte des extrémités qui font saillie des deux côtés de la barrière, auquel cas à chaque extrémité il est prévu un collet, contre lequel les zones en forme de fentes d'une extrémité inférieure de la fourche de la roue avant sont bloquées par serrage sur l'axe au moyen du dispositif de fixation.

17. Dispositif de retenue pour bicyclettes selon la revendication 1, caractérisé en ce que le dispositif de retenue d'axe (34) est constitué par deux douilles qui sont insérées à force ou vissées dans le trou (34) formé dans la barrette (35) et comportent un collet, les zones respectives en forme de fentes de l'extrémité intérieure de la fourche de la roue avant étant bloquées fermement par se-rage au moyen des dispositifs de fixation situés sur l'axe contre un collet.

18. Dispositif de retenue pour bicyclettes selon l'une des revendications 1 à 3, caractérisé en ce que le dispositif de retenue de la roue avant est la rainure (39) formée dans la plaque de base et qui est située en un emplacement tel que la partie supérieure de la roue est située, dans le cas de l'utilisation, au-dessous d'un guidon et peut être fixée à ce dernier par exemple à l'aide de sangles.
